# EUROPEAN PATENT APPLICATION

(11) **EP 4 501 864 A1**
(43) Date of publication of application: **05.02.2025**
(21) Application number: 23188712.6
(22) Date of filing: 31.07.2023
(51) Int. Cl.: C02F 1/04, C02F 1/12, C02F 1/48, B01D 1/00, C02F 1/02, C02F 101/30, C02F 103/08

(54) **PROCESS FOR REMOVING MICROPLASTICS FROM WATER AND DEVICE FOR CARRYING OUT THE SAME**

(71) Applicant: Rouse, Charles George, 17159 Dargun (DE)
(72) Inventor: Rouse, Charles George, 17159 Dargun (DE); Flather, Timothy, Exmouth (GB); Orgee, David Jonathan, Stafford (GB)
(74) Representative: dompatent von Kreisler Selting Werner - Partnerschaft von Patent- und Rechtsanwälten mbB

(57) **Abstract**

The present invention relates to a process for the removal of microplastics from water as well as a device for carrying out the inventive process. In the process of the invention the water droplets are generated by passing a high-pressure water steam through at least one non-metal sieve (1). The microplastics are then removed by first vaporizing the water droplets when passing them through a first electrically charged metal sieve (2) and then the vaporized water is passed through a second electrically charged metal sieve (3). The steam, after passing through the second sieve is directed to a distillery device (4) for cooling.

## Description

The present invention relates to a process for the removal of microplastics from water as well as a device for carrying out the inventive process.

Microplastics are generally defined as fragments of any type of plastics less than 5 mm in length. They cause pollution by entering natural ecosystems from a variety of sources, including cosmetics, clothing, food packaging and industrial processes.

Due to the slow degradation of plastics, microplastics have a high probability of ingestion, incorporation into, and accumulation in bodies and tissue of many organisms. Cases are known where microplastics have been found in animal tissue and human blood. While there is of today no evidence of widespread ecological risk from microplastics pollution, risks are likely to occur if pollution continues at its current rate.

The rapid growth of research in that area may help in better understanding the influence microplastics may already have or at least develop on our eco system while already a number of approaches are pursued to remove microplastics from the environment, in particular water.

US 2022/0226834 refers to a process for separating microplastics from an aqueous matrix comprising microplastics, the process comprising (a) providing an aqueous matrix comprising microplastics, (b) adding magnetic iron mineral particles the average diameter of which is comprised between 0.1 and 100 µm to the aqueous matrix provided in step (a) to form microplastic/magnetic iron mineral particle aggregates, and (c) separating the microplastic/magnetic iron mineral particle aggregates from the mixture obtained in step (b) by applying a magnetic field.

WO 2022/224052 discloses a method of removing microplastic particles from a water-based liquid, comprising the exposure of the liquid to a solid surface on which is retained a non-ionic surfactant having an HLB value of 5 maximum, in a concentration suitable for entrapping substantially all microplastic particles.

WO 2022/203956 provides a method for removing microplastics from a body of water, comprising (a) allowing a body of water comprising microplastics to flow past a root network of at least one apparatus coupled to an anchor, the apparatus comprising a frame, the frame having a top surface and a bottom surface, the bottom surface of the frame defining at least one anchor point coupled to the anchor, the frame configured to keep at least a portion of the top surface of the frame above a top surface of the body of water; a root network operably coupled to the frame and extending below the frame, where the root network comprises a plurality of roots of long-root plants coupled to a microporous layer, the microporous layer comprising an array of holes extending from a top surface to a bottom surface, the microporous layer being removably attached to the frame; a plurality of non-root natural fibers coupled to a microporous layer comprising an array of holes extending from a top surface to a bottom surface, the microporous layer being removably attached to the frame; a plurality of filters; or a combination thereof; (b) allowing the microplastics to be physically entangled by the root network; and (c) removing the root network from the at least one apparatus.

Microplastics have been detected in the air, in water, even drinking water, and soil and thus find the way to the human body by the food we eat and the water we drink. Alarmingly, standard water treating facilities cannot remove all traces of microplastics. It is therefore the object of the present invention to provide a method for the removal of microplastics from water which is efficient and easily implemented in standard water treating methods.

Within the course of the present invention, it was surprisingly found that microplastics can be efficiently removed from water by employing the ability of the microplastics to be statically charged.

Accordingly, a first object of the present invention is a process for removing microplastics from water wherein the microplastics are removed from the water by first vaporizing the water by passing water droplets through a first electrically charged metal sieve and then passing the vaporized water through a second electrically charged metal sieve.

It has been surprisingly found that by passing water droplets comprising microplastics through an electrically charged metal sieve. Without being bound by theory, it is believed that the microplastics stick to the metal sieve due to static forces and can thus be efficiently removed from the water. To ensure optimum removal, the water droplets are turned into steam and passed through a second electrically charged metal sieve. Once the sieve is saturated, it can be easily replaced and recycled.

The water is vaporized by passing water droplets through an electrically charged metal sieve. The water droplets are preferably generated by passing a high-pressure water stream through a sieve, preferably a Kevlar sieve. Such high-pressure water mist is, for example, known from a variety of applications, such as fire suppression and surface cooling. It was surprisingly found that this known technique can also be employed in the process according to the present invention to obtain water droplets of favorable size. The water droplets are commonly generated using an operative pressure of 60 to 80 MPa. In this regard, Kevlar sieves were found to be favorable to withstand the high-pressure environment.

The process of the present invention employs electrically charged metal sieves. The mesh size of the sieves may be adjusted according to need. However, in general a Dutch weave mesh having a mesh size of 1 µm is preferred for the first and/or second electrically charged sieve. The sieves may be the same or different, with preference given to both sieves having the same weave and mesh size.

In order to further improve the efficiency of removal, the electrically charged metal sieves may be heated. In a preferred embodiment, the first and/or second electrically charged metal sieve is heated to a temperature of up to 180 °C below the melting point of the metal, preferably up to a temperature of 150 °C below the melting point, especially up to a temperature of 100 °C below the melting point. In any case, the first and/or second sieve is preferably heated to a temperature of at least 1100 °C. Working within the claimed temperature range ensures that the microplastics attach to the sieve and thus can be efficiently removed. The temperature of the first and second sieve may the same or different.

Although the term microplastics in general refer to plastic particles having a size of less than 5 mm, microplastics exist in a large variety of particle sizes, with the smaller particles being increasingly difficult to remove. The process of the invention focuses in particular on the smaller particles. Therefore, in a preferred embodiment, the microplastics have a particle size of 1 to 1000 µm, preferably 5 to 50 µm, in particular 5 to 30 µm. The particle size may be determined according to known methods, for example sampling.

The sieves employed in the process according to the invention need to be electrically chargeable as well as able to withstand constant contact with water vapor. It was found that in particular high-resistant materials are best suited to be employed in the process according to the invention. Therefore, in a preferred embodiment, the first and/or second sieve is made out of a material selected from the group consisting of tool steel and hard materials. From the group of hard materials, tungsten/iron compounds are particularly preferred.

After removal of the microplastics, the water is present in the form of steam. In order to preserve the water, in a preferred embodiment, said steam, after being passed through the second electrically charged metal sieve, is directed to a distillery device for cooling. In an alternative embodiment the steam may be used for generating energy, for example by being introduced into a turbine.

The problem and dangers of microplastics are particularly severe in oceans where they have been detected in marine organisms from plankton to whales. Here the impact is made even more severe by the fact that microplastics in the ocean can bind to other harmful chemicals before being ingested by marine organisms. In this regard, it was surprisingly found that the process of the present invention can also be used for removing microplastics from sea water. Therefore, in a preferred embodiment, the water comprising the microplastics is sea water.

A further object of the present invention is a device for carrying out the process according to the invention. The device comprises a first means for electrically charging a first metal sieve, a second means for electrically charging a second metal sieve, a first metal sieve and a second metal sieve, the second metal sieve being preferably arranged downstream of the first metal sieve.

In a preferred embodiment, the device further comprises means for heating the first and/or second metal sieve.

In a further preferred embodiment, the device further comprises at least one non-metal sieve, the at least one non-metal sieve being preferably made of Kevlar and being preferably arranged upstream of the first metal sieve.

In a further embodiment, the device according to the invention further comprises a pump for generating a high-pressure water stream.

In a further preferred embodiment, the device according to the invention further comprises a distillery device.

To facilitate swift progression of the water, the device preferably further comprises a high-pressure pumping unit.

The present invention will be explained in more detail with reference to the following figure, which, by no means, is to be understood as limiting the scope and spirit of the invention.

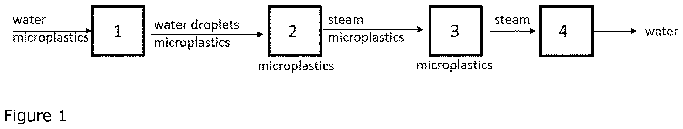

Figure 1 shows a flow chart illustrating the process of the present invention.

Water comprising microplastics is passed through a Kevlar sieve (1) under high pressure to generate water droplets. The water droplets are turned to steam by being propelled through a first electrically charged metal sieve (2) while the microplastics stick to the metal sieve. The generated steam is then passed through a second electrically charged metal sieve (3) to remove any remaining microplastics. The filtered stream is conveyed to a distillery unit for cooling and the recovered water is collected.

## Claims

1. Process for removing microplastics from water, **characterized in that** the microplastics are removed from the water by first vaporizing the water by passing water droplets through a first electrically charged metal sieve and then passing the vaporized water through a second electrically charged metal sieve.

2. Process according to claim 1, **characterized in that** the water droplets are generated by passing a high-pressure water stream through at least one non-metal sieve, preferably a Kevlar sieve.

3. Process according to any of the forgoing claims, **characterized in that** the first and/or second electrically charged metal sieve has a Dutch weave mesh, preferably having a mesh size of 1 µm.

4. Process according to any of the forgoing claims, **characterized in that** the first and/or second electrically charged sieve is heated to a temperature of up to 180 °C below the melting point of the metal, preferably up to a temperature of 150 °C below the melting point, especially up to a temperature of 100 °C below the melting point.

5. Process according to any of the forgoing claims, **characterized in that** the microplastics have a particle size of from 1 to 1000 µm, preferably 5 to 50 µm, in particular 5 to 30 µm.

6. Process according to any of the forgoing claims, **characterized in that** the first and/or second electrically charged metal sieve is made of made out of a material selected from the group consisting of tool steel and hard materials.

7. Process according to any of the forgoing claims, **characterized in that** the steam, after passing through the second electrically charged metal sieve, is directed to a distillery device for cooling.

8. Process according to any of the forgoing claims, **characterized in that** the water is sea water.

9. Device for carrying out the process of any of the forgoing claims, **characterized in that** the device comprises a first means for electrically charging a first metal sieve, a second means for electrically charging a second metal sieve, a first metal and a second metal sieve.

10. Device according to claim 9, **characterized in that** the device further comprises means for heating the first and second metal sieve.

11. The device according to any of claims 9 or 10, **characterized in that** the device further comprises at least one non-metal sieve, preferably a Kevlar sieve.

12. Device according to any of claims 9 to 11, **characterized in that** the device further comprises a pump for generating a high-pressure water stream.

13. Device according to any of claims 9 to 12, **characterized in that** the device further comprises a distillery device.

14. Device according to claims 9 to 12, **characterized in that** the device further comprises a high-pressure pumping unit.
